# EUROPÄISCHE PATENTSCHRIFT

(11) **EP 3 717 541 B1**
(45) Veröffentlichungstag und Bekanntmachung des Hinweises auf die Patenterteilung: **28.01.2026**
(21) Anmeldenummer: 18811542.2
(22) Anmeldetag: 30.11.2018
(51) Int. Cl.: C08G 18/66, C08G 18/76, C08G 18/08, C08G 18/32, C08G 18/42, C08G 18/44, C08G 18/24, H01B 3/30, C08K 5/3492, C08K 5/00

(54) **ALTERUNGSBESTÄNDIGES TPU**
NON-AGEING TPU
TPU RÉSISTANT AU VIEILLISSEMENT

(30) Priorität: 30.11.2017 EP 17204666
(43) Veröffentlichungstag der Anmeldung: 07.10.2020
(73) Patentinhaber: BASF SE, 67069 Ludwigshafen am Rhein (DE)
(72) Erfinder: HENZE, Oliver Steffen, 49448 Lemfoerde (DE); KEMPFERT, Dirk, 49448 Lemfoerde (DE); MUEHREN, Oliver, 49448 Lemfoerde (DE)
(74) Vertreter: BASF IP Association
(86) Internationale Anmeldenummer: PCT/EP2018/083146
(87) Internationale Veröffentlichungsnummer: WO 2019/106148

(56) Entgegenhaltungen:
- WO-A1-2013/190118
- DE-A1- 102013 021 027
- DE-A1- 19 800 287
- US-A- 3 509 233
- US-A- 5 656 713

## Beschreibung

Die vorliegende Erfindung betrifft thermoplastische Polyurethane, erhältlich oder erhalten nach einem Verfahren, umfassend die Umsetzung eines thermoplastischen Polyesters (PE-1) mit einem Diol (D1) unter Erhalt einer Zusammensetzung (Z1) enthaltend einen Polyester (PE-2) und die Umsetzung der gemäß Schritt (i) erhaltenen Zusammensetzung (Z1) mit einer Isocyanatzusammensetzung (11), enthaltend mindestens ein Polyisocyanat, und einer Polyolzusammensetzung (P1), wobei die Polyolzusammensetzung (P1) mindestens ein Polycarbonatpolyol (PC1) enthält, sowie ein Verfahren zur Herstellung des thermoplastischen Polyurethans. Weiterhin betrifft die vorliegende Erfindung eine Zusammensetzung enthaltend ein erfindungsgemäßes thermoplastisches Polyurethan und mindestens ein Flammschutzmittel. Die vorliegende Erfindung betrifft auch die Verwendung eines derartigen thermoplastischen Polyurethans zur Herstellung von Kabelummantelungen sowie Folien, Formteile, Rollen, Fasern, Verkleidungen in Automobilen, Schläuche, Kabelstecker, Faltenbälge, Schleppkabel, Kabelummantelungen, Dichtungen, Riemen oder Dämpfungselemente enthaltend ein derartiges thermoplastisches Polyurethan.

Thermoplastische Polyurethane sind allgemein bekannt wegen ihrer guten mechanischen Eigenschaften, ihrer hohen Abriebfestigkeit und der hohen Elastizität. Sie finden deshalb vielfältig Verwendung in unterschiedlichsten Anwendungen. Es werden in den einzelnen Anwendungen jedoch immer höhere Anforderungen bezüglich Alterungsbeständigkeit und Hydrolysebeständigkeit gestellt. Weiterhin werden zusätzlich häufig Anforderungen an das Brandverhalten gestellt.

US 3 509 233 A offenbart ein thermoplastisches Polyurethan (TPU), erhältlich durch Umsetzung eines Polyolblends mit einem Polyisocyanat. Auch DE 10 2013 021027A1 offenbart ein Verfahren zur Herstellung eines thermoplastischen Polyurethans, wobei zunächst eine Mischung eines Polycarbonatpolyols und eines Polyesterpolyols mit einem aromatischen Diisocyanat umgesetzt und anschließend mit einem Diol kettenverlängert wird.

DE 198 00 287 A1 offenbart ein thermoplastisches Polyurethan, das erhalten wird durch Umsetzung einer Polyolmischung mit einem Polyisocyanat, wobei die Polyolmischung ein Polyesterpolyol und ein Polycarbonatpolyol enthält.

Besonders hohe Anforderungen werden zum Beispiel für Kabel in Automobilanwendungen gefordert. Maßgebliche Normen für Kabel in Automobilanwendungen sind dabei die LV 112 und die ISO 6722, die die Materialien nach bestimmten Temperaturklassen einstufen.

Bisher waren Kabel der Temperaturklasse C für den Einsatz bei Automobilanwendungen ausreichend. Es genügte, wenn der für Kabel übliche Wickeltest nach einer Heißluftalterung bei 125°C für 3000h bestanden wurde. Dazu wurde häufig auch eine gute Hydrolysebeständigkeit bei einer Feucht-Wärme-Lagerung für 1000h bei 85 Grad Celsius und 85 Prozent relativer Feuchte gefordert.

Für neue Anwendungen wählen die Hersteller für motornahe Anwendungen oft Kabel, die mit der Temperaturklasse D bis 150 °C geeignet sind. Beispiele hierfür sind der Motorkabelsatz oder der Getriebeanschluss. Elektro- und Hybridfahrzeuge stellen dabei besonders hohe Anforderungen an den Kabelsatz und die Leitungen, die mit den bisher üblichen Bordnetzen nur eingeschränkt vergleichbar sind. So müssen diese Kabel - bedingt durch Hochspannungen bis zu 1000 V und entsprechend hohe Ströme - deutlich höhere Temperaturen aushalten als ihre Vorgänger. Die Kabel müssen dem üblichen Wickeltest nach einer 3000h Heißluftalterung bei 150°C standhalten.

Für die Temperaturklasse D (bis 150 °C) wird unter anderem Ethylen-Tetrafluorethylen-Copolymere (ETFE) eingesetzt. Dabei werden im Brandfall bei Verwendung von ETFE korrosive Gase gebildet, was den Einsatz dieser Materialien häufig einschränkt.

Ein weiterer Werkstoff sind spezielle vernetzte Polyolefincompounds. Die vernetzten Polyolefincompounds sind jedoch wegen der nötigen nachträglichen Vernetzung durch Bestrahlen oder Vulkanisation nur sehr aufwändig und mit hohen Kosten herstellbar und kommen oft wegen der chemischen Beständigkeit und der geringen mechanischen Belastbarkeit an ihre Grenzen. Die vernetzten Werkstoffe haben außerdem den Nachteil, dass sie nicht recyclebar sind und beim Anspritzen von Steckern und Tüllen Probleme mit der Wasserdichtigkeit bereiten.

Die mittlerweile überwiegend angewandte LV 112 bringt darüber hinaus Verschärfungen bezüglich der Hydrolysebeständigkeit bei hohen Temperaturen. Begnügt sich die ISO 6722 mit 1.000 Stunden bei 85 Grad Celsius und 85 Prozent relativer Feuchte, fordert die LV 112 auch hier eine Standzeit von 3000 Stunden.

Die übrigen Voraussetzungen für Kabelummantelungen sind in beiden Regelwerken weitgehend identisch geregelt und bei den hierfür angebotenen Materialien heute Standard. Dazu gehören Unempfindlichkeit gegen Kälte, Medienbeständigkeit und Hemmung des Pilzwachstums sowie Kompatibilität mit weiteren im Kabelsatz befindlichen Materialien wie Klebebändern, Schrumpfschläuchen und Steckern.

Für viele Anwendungen sind jedoch keine Werkstoffe vorhanden, die gute mechanische Eigenschaften mit den besonderen Anforderungen von Automobilanwendungen vereinen.

Eine Aufgabe der vorliegenden Erfindung war es, thermoplastische Polyurethane bereitzustellen, die eine Kombination der guten mechanischen und elastischen Eigenschaften sowie der hohen Abriebsbeständigkeit von thermoplastischen Polyurethanen mit gleichzeitig höherer Temperatur und Hydrolysebeständigkeit aufweisen.

Erfindungsgemäß wird diese Aufgabe gelöst durch ein thermoplastisches Polyurethan, erhältlich oder erhalten nach einem Verfahren, umfassend die Schritte (i) und (ii)
(i) Umsetzung eines thermoplastischen Polyesters (PE-1) mit einem Diol (D1) unter Erhalt einer Zusammensetzung (Z1) enthaltend einen Polyester (PE-2)
(ii) Umsetzung der gemäß Schritt (i) erhaltenen Zusammensetzung (Z1) mit einer Isocyanatzusammensetzung (11), enthaltend mindestens ein Polyisocyanat, und einer Polyolzusammensetzung (P1),

wobei die Polyolzusammensetzung (P1) mindestens ein Polycarbonatpolyol (PC1) enthält,
wobei der thermoplastische Polyester (PE-1) ein Molekulargewicht im Bereich von 15000 g/mol bis 70000 g/mol aufweist und der Polyester (PE-2) ein Molekulargewicht im Bereich von 1000 g/mol bis 6000 g/mol aufweist, und
wobei das Diol (D1) 1,4-Butandiol ist und der thermoplastische Polyester (PE-1) ausgewählt ist aus der Gruppe bestehend aus Polyalkylenterephthalaten und Poly-L-Milchsäure.

Das erfindungsgemäße Verfahren umfasst die Schritte (i) und (ii). Gemäß Schritt (i) wird mindestens ein thermoplastischer Polyester (PE-1) mit einem Diol (D1) unter Erhalt einer Zusammensetzung (Z1) enthaltend einen Polyester (PE-2) umgesetzt. Gemäß Schritt (ii) des erfindungsgemäßen Verfahrens wird die gemäß Schritt (i) erhaltene Zusammensetzung (Z1) mit einer Isocyanatzusammensetzung (11), enthaltend mindestens ein Polyisocyanat, und einer Polyolzusammensetzung (P1) umgesetzt, wobei die Polyolzusammensetzung (P1) mindestens ein Polycarbonatpolyol (PC1) enthält.

Die Umsetzung gemäß Schritt (i) erfolgt vorzugsweise kontinuierlich. Gemäß einer weiteren Ausführungsform betrifft die vorliegende Erfindung demgemäß ein Verfahren zur Herstellung eines thermoplastischen Polyurethans wie zuvor beschrieben, wobei die Umsetzung gemäß Schritt (i) kontinuierlich erfolgt.

Die Umsetzung gemäß Schritt (ii) erfolgt unter geeigneten Bedingungen, die eine Reaktion des Diisocyanats mit den freien reaktiven Gruppen erlauben. Die Umsetzung kann erfindungsgemäß in einer geeigneten Apparatur erfolgen, wobei dem Fachmann geeignete Verfahren an sich bekannt sind. Erfindungsgemäß ist es auch möglich, dass Zusatzstoffe oder Hilfsmittel eingesetzt werden, um die Umsetzung gemäß Schritt (i) oder (ii) zu beschleunigen bzw. zu verbessern. Insbesondere können Katalysatoren eingesetzt werden.

Geeignete Katalysatoren für die Umsetzung gemäß Schritt (i) sind beispielsweise Tributylzinnoxid, Zinn(II)-Diisooctoat, Dibutylzinndilaurat, Tetrabutylorthotitanat oder Bi(III)-Carboxylate.

Insbesondere kann die Umsetzung gemäß Schritt (i) oder die Umsetzung gemäß Schritt (ii) oder die Umsetzung gemäß Schritt (i) und Schritt (ii) in einem Extruder erfolgen.

Die Umsetzung gemäß Schritt (i) kann beispielsweise bei einer Temperatur im Bereich von 200 bis 310°C erfolgen, vorzugsweise im Bereich von 220 bis 300°C und insbesondere von 220 bis 280°C, weiter bevorzugt von 230 bis 260°C und einer Verweilzeit von 15 Sekunden bis 30 Minuten, vorzugsweise 20 Sekunden bis 10 Minuten in beispielsweise fließfähigem, erweichten oder vorzugsweise geschmolzenem Zustand der Polyesters und des Diols, insbesondere durch Rühren, Walzen, Kneten oder vorzugsweise Extrudieren, beispielsweise unter Verwendung von üblichen Plastifizierungsvorrichtungen, wie beispielsweise Mühlen, Knetern oder Extrudern, vorzugsweise in einem Extruder.

Das erfindungsgemäße Verfahren kann weitere Schritte umfassen, beispielsweise Temperaturanpassungen oder formgebende Schritte.

Gemäß Schritt (i) wird ein thermoplastischer Polyester (PE-1) eingesetzt. Erfindungsgemäß geeignete thermoplastische Polyester sind an sich bekannt. Geeignete Polyester sind aus mindestens einer Dicarbonsäure und mindestens einer geeigneten Dihydroxyverbindung aufgebaut. Die Polyester können beispielsweise hergestellt werden durch Polykondensation von aliphatischen oder aromatischen Dicarbonsäuren oder Mischungen aus aromatischen und aliphatischen und/oder cycloaliphatischen Dicarbonsäuren sowie den entsprechenden esterbildenden Derivaten, wie z.B. Dicarbonsäureanhydriden, Mono- und/oder Diestern mit zweckmäßigerweise maximal 4 Kohlenstoffatomen im Alkoholrest, mit aliphatischen Dihydroxyverbindungen bei erhöhten Temperaturen, beispielsweise von 160 bis 260°C, in Gegenwart oder Abwesenheit von Veresterungskatalysatoren.

Geeignet ist erfindungsgemäß insbesondere Terephthalsäure..

Erfindungsgemäß können auch Polyester funktionalisierter Dicarbonsäuren eingesetzt werden, beispielsweise auf Milchsäure basierende Polyester.

Als weitere Aufbaukomponente der thermoplastischen Polyester (PE-1) können im Rahmen der vorliegenden Erfindung aliphatische oder aromatische Dihydroxyverbindungen eingesetzt werden. Als aliphatische Dihydroxyverbindungen kommen vorzugsweise Alkandiole mit 2 bis 6 Kohlenstoffatomen und Cycloalkandiole mit 5 bis 7 Kohlenstoffatomen in Betracht. Beispielhaft genannt seien und bevorzugt angewandt werden 1,2-Ethandiol, 1,3-Propandiol, 1,4-Butandiol, 1,6-Hexandiol, Neopentylglykol und 1,4-Cyclohexandiol oder Mischungen aus mindestens zwei der genannten Diole.

Als thermoplastische Polyester geeignet sind erfindungsgemäß thermoplastische Polyester ausgewählt aus der Gruppe bestehend aus Polyalkylenterephthalaten und Poly-L-Milchsäure. Erfindungsgemäß ist der thermoplastische Polyester (PE-1) ausgewählt ist aus der Gruppe bestehend aus Polyalkylenterephthalaten und Poly-L-Milchsäure.

Geeignete Molekulargewichtsbereiche (Mn) des eingesetzten Polyesters liegen erfindungsgemäß im Bereich von 15000 bis 70000, besonders bevorzugt im Bereich von 20000 bis 30000.

Erfindungsgemäß weist der thermoplastische Polyester (PE-1) ein Molekulargewicht im Bereich von 15000 g/mol bis 70000 g/mol auf.

Soweit nicht anders angegeben erfolgt im Rahmen der vorliegenden Erfindung die Bestimmung der gewichtsmittleren Molekulargewichte Mw der thermoplastischen Polyester, gelöst in HFIP (Hexafluorisopropanol) mittels GPC. Die Bestimmung des Molekulargewichts erfolgt mittels zwei hintereinandergeschalteter GPC-Säulen (PSS-Gel; 100A; 5µ; 300*8mm, Jordi- Gel DVB; MixedBed; 5µ; 250*10mm; Säulentemperatur 60°C; Fluss 1 mL/min; RI-Detektor). Dabei erfolgt die Kalibrierung mit Polymethylmethacrylat (EasyCal; Fa. PSS, Mainz), als Laufmittel wird HFIP verwendet.

Gemäß Schritt (i) wird der thermoplastische Polyester (PE-1) mit einem Diol (D1) umgesetzt. Als Diol (D1) wird erfindungsgemäß 1,4-Butandiol eingesetzt.

Gemäß Schritt (i) wird eine Zusammensetzung (Z1) enthaltend einen Polyester (PE-2) erhalten, die dann gemäß Schritt (ii) umgesetzt wird.

Dabei ist die Zusammensetzung (Z1) üblicherweise ein Gemisch, das neben dem Polyester (PE-2) auch nicht umgesetzten Polyester (PE-1) oder nicht umgesetztes Diol enthalten kann. Das Polyester (PE-2) liegt dabei erfindungsgemäß als Gemisch vor, wobei die einzelnen Moleküle beispielsweise in der Verteilung sowie der Länge der Polyester-Blöcke verschieden sein können. Erfindungsgemäß weist das Polyester (PE-2) bevorzugt ein Molekulargewicht im Bereich von 1000 g/mol bis 6000 g/mol auf, weiter bevorzugt im Bereich vom 1500 g/mol bis 4500 g/mol, besonders bevorzugt im Bereich von 2000 g/mol bis 4000 g/mol.

Die Zusammensetzung (Z1) wird dann gemäß Schritt (ii) mit einer Isocyanatzusammensetzung (I1) und einer Polyolzusammensetzung (P1) umgesetzt.

Erfindungsgemäß enthält die Polyolzusammensetzung (P1) mindestens ein Polycarbonatpolyol (PC1). Geeignete Polycarbonatpolyole sind dem Fachmann an sich bekannt. Geeignet sind im Rahmen der vorliegenden Erfindung insbesondere aliphatische Polycarbonatdiole. Geeignete Polycarbonatdiole sind beispielsweise Polycarbonatdiole, die auf Alkandiolen basieren. Geeignete Polycarbonatdiole sind streng difunktionelle OH-funktionelle Polycarbonatdiole, bevorzugt streng difunktionelle OH-funktionelle aliphatische Polycarbonatdiole. Geeignete Polycarbonatdiole basieren beispielsweise auf Butandiol, Pentandiol oder Hexandiol, insbesondere 1,4-Butandiol, 1,5-Pentandiol, 1,6-Hexandiol, 3-Methylpentan-(1,5)-diol oder Mischungen davon, besonders bevorzugt 1,4-Butandiol, 1,5-Pentandiol, 1,6-Hexandiol oder Mischungen davon. Bevorzugt werden im Rahmen der vorliegenden Erfindung Polycarbonatdiole basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole eingesetzt.

Gemäß einer weiteren Ausführungsform betrifft die vorliegende Erfindung auch ein thermoplastisches Polyurethan wie zuvor beschrieben, wobei das mindestens eine Polycarbonatpolyol (PC1) ausgewählt ist aus der Gruppe bestehend aus Polycarbonatdiolen basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole.

Vorzugsweise weisen die eingesetzten Polycarbonatdiole ein zahlenmittleres Molekulargewichte Mn im Bereich von 500 bis 4000, bestimmt über GPC, bevorzugt im Bereich von 650 bis 3500, bestimmt über GPC, besonders bevorzugt im Bereich von 800 bis 3000, bestimmt über GPC auf.

Gemäß einer weiteren Ausführungsform betrifft die vorliegende Erfindung auch ein thermoplastisches Polyurethan wie zuvor beschrieben, wobei das mindestens eine Polycarbonatpolyol (PC1) ein zahlenmittleres Molekulargewicht Mn im Bereich von 500 bis 4000, bestimmt über GPC, aufweist.

Erfindungsgemäß kann die Polyolzusammensetzung (P1) weitere Polyole enthalten. Geeignete Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Besonders bevorzugt sind Polyeterpolyole. Das zahlenmittlere Molekulargewicht der erfindungsgemäß eingesetzten Polyole liegen vorzugsweise zwischen 500 g/mol und 3000 g/mol, bevorzugt zwischen 600 g/mol und 2500 g/mol, insbesondere zwischen 650 g/mol und 2000 g/mol.

Bevorzugte Polyetherole sind erfindungsgemäß Polyethyleneglykole, Polypropylenglykole und Polytetrahydrofurane.

Erfindungsgemäß kann die Polyolzusammensetzung beispielsweise auch ein Lösungsmittel enthalten. Geeignete Lösungsmittel sind dem Fachmann an sich bekannt.

Im Rahmen der vorliegenden Erfindung können bei der Umsetzung in der Polyolzusammensetzung auch Zusatzstoffe oder Hilfsmittel eingesetzt werden, beispielsweise Antioxidantien, UV-Absorber, UV-Filter, Hydrolyseschutzmittel, Wachse, Gleitmittel, Weichmacher, Verarbeitungshilfsmittel, Nukleierungsmittel, Füllstoffe, Flammschutzmittel.

Erfindungsgemäß wird mindestens eine Isocyanatzusammensetzung (I1), enthaltend mindestens ein Polyisocyanat eingesetzt. Vorzugsweise wird als Polyisocyanat ein Diisocyanat eingesetzt. Erfindungsgemäß können auch Mischungen aus zwei oder mehr Diisocyanaten eingesetzt werden. Bevorzugte Diisocyanate sind im Rahmen der vorliegenden Erfindung insbesondere aliphatische oder aromatische Diisocyanate.

Als Isocyanate werden bevorzugt aliphatische, cycloaliphatische, araliphatische und/oder aromatische Isocyanate eingesetzt, weiter bevorzugt Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyldiphenyl-diisocyanat, 1,2-Diphenylethandiisocyanat und/oder Phenylendiisocyanat. Besonders bevorzugt wird 4,4'MDI eingesetzt.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'- und/oder 2,2'-Methylendicyclohexyldiisocyanat (H12MDI).

Gemäß einer weiteren Ausführungsform betrifft die vorliegende Erfindung auch ein thermoplastisches Polyurethan wie zuvor beschrieben, wobei das Polyisocyanat ausgewählt ist aus der Gruppe bestehend aus Hexamethylendiisocyanat und Diphenylmethandiisocyanat (MDI) ist.

Erfindungsgemäß kann die Isocyanatzusammensetzung in reiner Form oder in Form einer Zusammensetzung enthaltend das Diisocyanat und mindestens ein Lösungsmittel eingesetzt werden. Geeignete Lösungsmittel sind dem Fachmann bekannt. Geeignet sind beispielsweise nicht reaktive Lösungsmittel wie Ethylacetat, Methylethylketon, Tetrahydrofuran und Kohlenwasserstoffe.

Erfindungsgemäß können bei der Umsetzung gemäß Schritt (ii) weitere Einsatzstoffe zugesetzt werden, beispielsweise Katalysatoren oder Hilfs- und Zusatzstoffe.

Katalysatoren, die insbesondere die Reaktion zwischen den NCO-Gruppen und den Hydroxylgruppen der gegenüber Isocyanaten reaktiven Verbindungen beschleunigen, sind beispielsweise tertiären Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen wie Titansäureester, Eisenverbindungen, bevorzugt Eisen-(III)-acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Bismutsalzen in denen Bismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Bismutsalze sind Bismut(III)-neodecanoat, Bismut-2-etyhlhexanoat und Bismut-octanoat. Die Katalysatoren (d) werden bevorzugt in Mengen von 0,0001 bis 0,1 Gew.-Teilen pro 100 Gew.-Teile der mit Isocyanten reakiven Verbindung (b) eingesetzt. Bevorzugt werden Zinnkataylsatoren eingesetzt, insbesondere Zinndioktoat.

Die Katalysatoren werden üblicherweise in Mengen von 3 ppm bis 2000 ppm, bevorzugt 10 ppm bis 1200 ppm, weiter bevorzugt 20 ppm bis 1000 ppm und am meisten bevorzugt von 30 ppm bis 800 ppm eingesetzt.

Neben Katalysatoren können bei der Umsetzung gemäß Schritt (ii) auch übliche Hilfsstoffe hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Erfindungsgemäß wird ein thermoplastisches Polyurethan erhalten. Die Eigenschaften des erfindungsgemäßen thermoplastischen Polyurethans können in weitern Bereichen variieren. Vorzugsweise weist das erfindungsgemäße thermoplastische Polyurethan eine Shore Härte im Bereich von 45A bis 78 D auf, bevorzugt eine Shore Härte im Bereich von 80A bis 70D, besonders bevorzugt eine Shore Härte im Bereich von 85A bis 95A.

Gemäß einer weiteren Ausführungsform betrifft die vorliegende Erfindung auch ein thermoplastisches Polyurethan wie zuvor beschrieben, wobei das thermoplastische Polyurethan eine Shore Härte im Bereich von Shore 45 A bis Shore 78 D aufweist.

Gemäß einem weiteren Aspekt betrifft die vorliegende Erfindung auch ein Verfahren zur Herstellung eines thermoplastischen Polyurethans, umfassend die Schritte (i) und (ii)
(i) Umsetzung eines thermoplastischen Polyesters (PE-1) mit einem Diol (D1) unter Erhalt einer Zusammensetzung (Z1) enthaltend einen Polyester (PE-2)
(ii) Umsetzung der gemäß Schritt (i) erhaltenen Zusammensetzung (Z1) mit einer Isocyanatzusammensetzung (11), enthaltend mindestens ein Polyisocyanat, und einer Polyolzusammensetzung (P1),

wobei die Polyolzusammensetzung (P1) mindestens ein Polycarbonatpolyol (PC1) enthält,
wobei der thermoplastische Polyester (PE-1) ein Molekulargewicht im Bereich von 15000 g/mol bis 70000 g/mol aufweist und der Polyester (PE-2) ein Molekulargewicht im Bereich von 1000 g/mol bis 6000 g/mol aufweist, und
wobei das Diol (D1) 1,4-Butandiol ist und der thermoplastische Polyester (PE-1) ausgewählt ist aus der Gruppe bestehend aus Polyalkylenterephthalaten und Poly-L-Milchsäure.

Bezüglich bevorzugter Ausführungsformen wird auf die oben genannten Ausführungen Bezug genommen.

Weiterhin betrifft die vorliegende Erfindung eine Zusammensetzung, enthaltend ein erfindungsgemäßes thermoplastisches Polyurethan. Dabei kann im Rahmen der vorliegenden Erfindung die Zusammensetzung weitere Komponenten wie beispielsweise Füllstoffe, Glasfasern, Weichmacher oder Flammschutzmittel enthalten. Die Zusammensetzung kann eine oder mehrere der gerannten Komponenten enthalten.

Die vorliegende Erfindung betrifft demgemäß auch eine Zusammensetzung enthaltend mindestens die Komponenten (A) und (B)
(A) ein thermoplastisches Polyurethan gemäß der vorliegenden Erfindung,
(B) mindestens ein Flammschutzmittel.

Geeignete Füllstoffe, Weichmacher oder Flammschutzmittel sind dem Fachmann an sich bekannt. Bevorzugt können im Rahmen der vorliegenden Erfindung Flammschutzmittel ausgewählt aus der Gruppe bestehend aus Metallhydroxiden, stickstoffhaltigen Flammschutzmittel und phosphorhaltigen Flammschutzmittel eingesetzt werden.

Gemäß einer weiteren Ausführungsform betrifft die vorliegende Erfindung auch eine Zusammensetzung wie zuvor beschrieben, wobei das Flammschutzmittel ausgewählt ist aus der Gruppe bestehend aus Metallhydroxiden, stickstoffhaltigen Flammschutzmitteln und phosphorhaltigen Flammschutzmitteln.

Die erfindungsgemäße Zusammensetzung enthält das mindestens eine thermoplastische Polyurethan üblicherweise in einer Menge im Bereich von 20 Gew.- % bis 90 Gew.-%, bezogen auf die gesamte Zusammensetzung, bevorzugt im Bereich von 50 Gew.-% bis 90 Gew.-%, weiter bevorzugt im Bereich von 60 Gew.- % bis 85 Gew.- % und besonders bevorzugt im Bereich von 65 Gew.-% bis 85 Gew.-%, jeweils bezogen auf die gesamte Zusammensetzung.

Gemäß einer weiteren Ausführungsform betrifft die vorliegende Erfindung auch eine Zusammensetzung wie zuvor beschrieben, wobei der Anteil der Summe der thermoplastischen Polyurethane in der Zusammensetzung im Bereich von 20 bis 90 Gew.-%, bezogen auf die gesamte Zusammensetzung, liegt.

In einer Ausführungsform werden zur Herstellung der erfindungsgemäßen Zusammensetzungen thermoplastisches Polyurethan und Flammschutzmittel in einem Arbeitsschritt verarbeitet. In anderen bevorzugten Ausführungsformen wird zur Herstellung der erfindungsgemäßen Zusammensetzungen zunächst mit einem Reaktionsextruder, einer Bandanlage oder sonstigen geeigneten Vorrichtungen ein thermoplastisches Polyurethan hergestellt, bevorzugt als Granulat, in das dann in mindestens einem weiteren Arbeitsschritt, oder auch mehreren Arbeitsschritten, mindestens ein weiteres Flammschutzmittel eingebracht wird.

Das Vermischen des thermoplastischen Polyurethans mit dem mindestens einen Flammschutzmittel, erfolgt beispielsweise in einer Mischeinrichtung, die bevorzugt ein InnenKneter oder ein Extruder, bevorzugt ein Zweiwellenextruder, ist. In einer anderen bevorzugten Ausführungsform unter Verwendung eines Extruders ist das eingebrachte Flammschutzmittel bei der Temperatur flüssig, die in Fließrichtung stromabwärts nach dessen Zugabe in den Extruder herrscht.

Geeignete Flammschutzmittel sind beispielsweise Metallhydroxide. Im Brandfall setzten Metallhydroxide ausschließlich Wasser frei und bilden daher keine toxischen oder korrosiven Rauchgasprodukte. Darüber hinaus sind diese Hydroxide in der Lage, die Rauchgasdichte im Brandfall zu reduzieren. Nachteil dieser Substanzen ist jedoch, dass sie gegebenenfalls die Hydrolyse von thermoplastischen Polyurethanen fördern und auch die oxidative Alterung der Polyurethane beeinflussen.

Geeignet sind im Rahmen der vorliegenden Erfindung vorzugsweise Hydroxide des Magnesiums, Calciums, Zinks und/oder Aluminiums oder Mischungen dieser. Besonders bevorzugt ist das Metallhydroxid ausgewählt ist aus der Gruppe bestehend aus Aluminiumhydroxiden, Aluminiumoxidhydroxiden, Magnesiumhydroxid und einer Mischung aus zwei oder mehr dieser Hydroxide.

Die erfindungsgemäßen Zusammensetzungen können auch ein phosphorhaltiges Flammschutzmittel enthalten. Erfindungsgemäß können prinzipiell alle bekannten phosphorhaltigen Flammschutzmittel für thermoplastische Polyurethane eingesetzt werden.

Bevorzugt werden im Rahmen der vorliegenden Erfindung Derivate der Phosphorsäure, Derivate der Phosphonsäure oder Derivate der Phosphinsäure oder Mischungen aus zwei oder mehreren dieser Derivate eingesetzt. Gemäß einer weiteren bevorzugten Ausführungsform ist das phosphorhaltige Flammschutzmittel bei 21 °C flüssig.

Bevorzugt handelt es sich bei den Derivaten der Phosphorsäure, Phosphonsäure oder Phosphinsäure um Salze mit organischem oder anorganischem Kation oder um organische Ester. Organische Ester sind Derivate der Phosphor-haltigen Säuren, bei denen zumindest ein direkt an den Phosphor gebundenes Sauerstoffatom mit einem organischen Rest verestert ist. In einer bevorzugten Ausführungsform handelt es sich bei dem organischen Ester um einen Alkylester, in einer anderen bevorzugten Ausführungsform um einen Arylester. Besonders bevorzugt sind alle Hydroxygruppen der entsprechenden Phosphor-haltigen Säure verestert.

Geeignete organische Phosphatester sind beispielsweise die Triester, der Phosphorsäure, wie Trialkylphosphate und insbesondere Triarylphosphate, wie zum Beispiel Resorcinol bis (diphenyl phosphate).

Erfindungsgemäß geeignet sind insbesondere Salze der jeweiligen Derivate der Phosphorsäure, Phosphonsäure oder Phosphinsäure, weiter bevorzugt Phosphinatsalze. Im Rahmen der vorliegenden Erfindung geeignet sind beispielsweise Melaminpolyphosphat oder Diethylaluminiumphosphinat.

Weiterhin können im Rahmen der vorliegenden Erfindung auch stickstoffhaltige Flammschutzmittel eingesetzt werden. Erfindungsgemäß können prinzipiell alle bekannten stickstoffhaltigen Flammschutzmittel für thermoplastische Polyurethane eingesetzt werden.

Geeignete Flammschutzmittel sind im Rahmen der vorliegenden Erfindung beispielsweise auch Melaminderivate wie insbesondere Melaminpolyphosphat oder Melamincyanurat.

Im Rahmen der vorliegenden Erfindung ist es auch möglich, dass die Zusammensetzung neben dem thermoplastischen Polyurethan Mischungen verschiedener Flammschutzmittel enthält, beispielsweise ein Melaminderivat und ein Derivat der Phosphorsäure, oder ein Melaminderivat und ein Derivat der Phosphinsäure oder ein Melaminderivat, ein Derivat der Phosphorsäure und ein Derivat der Phosphinsäure.

Bei dem Melaminderivat kann es sich vorzugsweise um ein Melamincyanurat handeln. Demgemäß kann die vorliegende Erfindung gemäß einer weiteren ausführungsform auch eine Zusammensetzung betreffen, die neben dem thermoplastischen Polyurethan beispielsweise ein Melamincyanurat und ein Derivat der Phosphorsäure, oder ein Melamincyanurat und ein Derivat der Phosphinsäure oder ein Melamincyanurat, ein Derivat der Phosphorsäure und ein Derivat der Phosphinsäure enthält. Beispielsweise enthält die erfindungsgemäße Zusammensetzung mindestens ein thermoplastisches Polyurethan, mindestens Melamincyanurat, mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure.

Bevorzugt enthält die Zusammensetzung neben dem Melamincyanurat, dem mindestens einen phosphorhaltigen Flammschutzmittel (F1) und dem mindestens einen phosphorhaltigen Flammschutzmittel (F2) keine weiteren Flammschutzmittel. Weiter bevorzugt enthält die erfindungsgemäße Zusammensetzung Melamincyanurat genau ein phosphorhaltiges Flammschutzmittel (F1) ausgewählt aus der Gruppe bestehend aus Derivaten der Phosphorsäure und Derivaten der Phosphonsäure und genau ein phosphorhaltiges Flammschutzmittel (F2) ausgewählt aus der Gruppe bestehend aus Derivaten der Phosphinsäure.

Die vorliegende Erfindung betrifft auch die Verwendung der erfindungsgemäßen Zusammensetzung enthaltend mindestens ein flammgeschütztes thermoplastisches Polyurethane wie zuvor beschrieben, zur Herstellung von Beschichtung, Dämpfungselemente, Faltenbälge, Folien oder Fasern, Formkörpern, Fußböden für Gebäude und Transport, Wirrvliese, bevorzugt Dichtungen, Rollen, Schuhsohlen, Schläuche, Kabel, Kabelstecker, Kabelummantelungen, Kissen, Laminate, Profile, Riemen, Sättel, Schäumen, Steckverbindungen, Schleppkabel, Solarmodule, Verkleidungen in Automobilen. Bevorzugt ist die Verwendung zur Herstellung von Kabelummantelungen. Die Herstellung erfolgt, bevorzugt aus Granulaten, durch Spritzguss, Kalandrieren, Pulversintern, oder Extrusion und/oder durch zusätzliches Schäumen der erfindungsgemäßen Zusammensetzung.

Gemäß einem weiteren Aspekt betrifft die vorliegende Erfindung auch die Verwendung eines thermoplastischen Polyurethans wie zuvor beschrieben oder einer Zusammensetzung wie zuvor beschrieben zur Herstellung von Kabelummantelungen.

Aufgrund der guten mechanischen Eigenschaften und des guten Temperaturverhaltens sind die erfindungsgemäßen thermoplastischen Polyurethane sowie die erfindungsgemäßen Zusammensetzungen insbesondere zur Herstellung von Folien, Formteile, Rollen, Fasern, Verkleidungen in Automobilen, Schläuche, Kabelstecker, Faltenbälge, Schleppkabel, Kabelummantelungen, Dichtungen, Riemen oder Dämpfungselementen geeignet.

Demgemäß betrifft die vorliegende Erfindung auch Folien, Formteile, Rollen, Fasern, Verkleidungen in Automobilen, Schläuche, Kabelstecker, Faltenbälge, Schleppkabel, Kabelummantelungen, Dichtungen, Riemen oder Dämpfungselemente enthaltend ein thermoplastisches Polyurethan wie zuvor beschrieben oder eine Zusammensetzung wie zuvor beschrieben.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Rohstoffe:

- Poly PTHF^{®} 1000:: Polytetrahydrofuran 1000, CAS-Nummer: 25190-06-1, BASF SE, 67056 Ludwigshafen, GERMANY, Unternehmensbereich Zwischenprodukte.
- 1,4-Butandiol:: Butan-1,4-diol, CAS-Nummer: 110-63-4, BASF SE, 67056 Ludwigshafen, GERMANY, Unternehmensbereich Zwischenprodukte.
- Lupranat MET:: 4,4'-Methylendiphenyldiisocyanat, CAS-Nummer: 101-68-8, BASF SE, 67056 Ludwigshafen, GERMANY.
- Polyol A:: Copolyesterdiol auf Basis 1,4-Butandiol, 1,6 Hexandiol (Verhältnis 2:1) und Adipinsäure, Wassergehalt % (w/w) < 0,1, Säurezahl [KOH mg/g] < 0,6, OH Zahl [KOH mg/g] = 48-53.
- Capromer PD1-20 (PolyCLO NPG2000):: Polycaprolacton, CAS-Nummer: 69089-45-8, Wassergehalt % (w/w) < 0,1, Säurezahl [KOH mg/g] < 0,25, OH Zahl [KOH mg/g] = 54-58.
- Eternacoll PH-200D:: Polycarbonatdiol auf Basis 1,6-Hexandiol und 1,5-Pentandiol im Verhältnis 1:1, Wassergehalt % (w/w) < 0,1, Säurezahl [KOH mg/g] < 0,1, OH Zahl [KOH mg/g] = 51-61; UBE Chemical Europe S.A., 28016 Madrid, Spain.
- Irganox 1010:: Pentaerythritol tetrakis(3-(3,5-di-tert-butyl-4-hydroxyphenyl)propionate), CAS Number: 6683-19-8, BASF SE, 67056 Ludwigshafen, GERMANY.
- Irganox 1098:: N,N'-Hexan-1,6-diylbis[3-(3,5-di-tert-butyl-4-hydroxyphenylpropionamid], CAS-Nummer: 23128-74-7, BASF SE, 67056 Ludwigshafen, GERMANY.
- Elastostab H01:: Hydrolyseschutzmittel für Polyesterpolyurethan, BASF Polyurethanes GmbH, 49440 Lemfoerde, GERMANY.
- Zinn-dioctoat:: Katalysator-Metall 93690, Zinnbis(2-ethylhexanoat), CAS-Nummer: 301-10-0, BASF Polyurethanes GmbH, 49440 Lemfoerde, GERMANY.
- Melapur MC 15 ED:: Melamincyanurat (1,3,5-Triazin-2,4,6(1H,3H,5H)-trion, Verbindung mit 1,3,5-Triazin-2,4,6-triamin (1 : 1)), CAS #: 37640-57-6, BASF SE, 67056 Ludwigshafen, GERMANY, Partikelgröße D99% </= 50 µm, D50%<= 4,5 µm, Wassergehalt % (w/w) < 0,2.
- Ultradur B4500 NAT:: Polymer auf Basis: Polybutylenterephthalat (PBT), BASF SE, 67056 Ludwigshafen, GERMANY.

### 2. Herstellung im Handgußverfahren

Die in der zugrundeliegenden Rezeptur festgelegte Menge Polyol und der Kettenverlängerer wird in der Weißblechdose eingewogen und kurz mit Stickstoff beschleiert. Die Dose wir mit einem Deckel verschlossen und im Heizschrank auf ca. 90°C aufgeheizt.

Ein weiterer Heizschrank zum Tempern der Schwarte wird auf 80 °C vorgeheizt. Die Teflonschale wird auf den Heiztisch gestellt und dieser auf 125°C eingestellt.

Die berechnete Menge an flüssigen Isocyanat wird durch Auslitern bestimmt. Dazu wird das flüssige Isocyanat (MDI wird mit einer Temperatur von ca. 48 °C ausgelitert) in einem PE-Becher eingewogen und innerhalb von 10s in einen PE-Becher ausgegossen. Anschließend wird der so entleerte Becher tariert und mit der berechneten Menge an Isocyanat befüllt. Im Fall von MDI wird dieser bei ca. 48°C im Heizschrank gelagert.

Zusätze wie Hydrolyseschutz, Antioxidans, etc. die bei RT als Feststoffe vorliegen, werden direkt eingewogen.

Das vorgeheizte Polyol wird auf einer Hebebühne unter den ruhenden Rührer gestellt. Anschließend wird das Reaktionsgefäß mit der Hebebühne soweit angehoben, bis die Rührblätter vollständig in das Polyol eintauchen.

Bevor der Rührmotor eingeschaltet wird, unbedingt darauf achten, dass sich der Drehzahlregler in der Nullstellung befindet. Anschließend wird die Drehzahl langsam hochgeregelt, so dass eine gute Durchmischung ohne Einrühren von Luft gewährleistet wird.

Anschließend werden Additive wie z.B. Antioxidantien in das Polyol gegeben.

Die Temperatur der Reaktionsmischung wird vorsichtig mit einem Heißluftfön auf 80°C eingestellt.

Falls erforderlich wird vor der Isocyanatzugabe Katalysator mit der Microliterspritze zur Reaktionsmischung dosiert. Bei 80 °C erfolgt nun die Zugabe von Isocyanat, indem die zuvor ausgeliterte Menge innerhalb von 10s in die Reaktionsmischung eingetragen wird. Durch Rückwaage erfolgt die Gewichtskontrolle. Abweichungen größer/kleiner 0,2 g von der Rezepturmenge werden dokumentiert. Mit der Zugabe des Isocyanats wird die Stoppuhr gestartet. Bei Erreichen von 110°C wird die Reaktionsmischung in die Teflonschalen, die auf 125°C vorgeheizt sind, ausgegossen.

10min nach Start der Stoppuhr wird die Schwarte vom Heiztisch genommen und anschließend für 15h im Heizschrank bei 80°C gelagert. Die ausgekühlte Schwarte wird in der Schneidmühle zerkleinert. Das Granulat wird nun für 3h bei 110°C getrocknet und trocken gelagert.

Grundsätzlich kann dieses Verfahren auf den Reaktionsextruder oder das Bandverfahren übertragen werden.

### 3. Reaktionsextruderverfahren - Herstellung wie in der EP 1419188 B1 beschrieben

Die Herstellung der nachfolgend beschriebenen TPU wurde auf einem Doppelschneckenextruder Typ ZSK 58 der Firma Werner & Pfleiderer durchgeführt. Die Länge des Extruderverfahrensteils betrug 12 Gehäuse, die Länge der Gehäuse selbst war der 4-fache Schneckendurchmesser. Der Schneckenaustrag aus dem Extruder wurde mittels einer Zahnradpumpe durchgeführt; die Granulierung erfolgte in einer üblichen Unterwassergranulierungseinrichtung. Das anfallende Granulat wurde dann in einem Wirbelbett-Trockner bei Temperaturen zwischen 60° bis 100°C und Verweilzeiten von 5 bis 10 min. auf Wassergehalte< 0,03 % getrocknet und anschließend 15 Std. bei 80°C getempert.

Die Temperaturen des Extrudergehäuses 1 betrug 260°C, der Gehäuse 2-4 290 bis 250°C, des Gehäuses 5 240°C, der Gehäuse 6-12, einschließlich der Schmelzeaustragseinrichtung, 230°C. Unter diesen Bedingungen resultierte bei einem Durchsatz von ca. 200 kg/h und einer Drehzahl von 200 Upm eine Schmelzetemperatur von 220-230°C.

Als teilkristalliner, hochmolekularer Polyester wurde ein handelsübliches Polybutylenterephthalat (Ultradur^{®} B 4500 / BASF Aktiengesellschaft) verwendet, als niedermolekulares Diol zum Abbau des hochmolekularen PBT Butandiol-1,4 und als aromatisches Diisocyanat 4,4'-Diisocyanatodiphenylmethan(MDI). Die verwendeten Polydiole (PDO) sind in Tabelle 1 beschrieben und charakterisiert.

In das Gehäuse 1 des Doppelschneckenextruders wurde kontinuierlich Ultradur^{®}-Granulat dosiert, in das Gehäuse 3 Butandiol-1.4 zusammen mit Zinn-dioctoat als Katalysator zur Beschleunigung des Abbaus. Im Gehäuse 5 des Doppelschneckenextruders wurden Polyol, MDI und Zinndioctoat zugesetzt. Stabilisatoren (Elastostab H01 und Irganox 1125) wurden durch seitlich angebrachte Dosiergeräte in Gehäuse 8 des Doppelschneckenextruders zudosiert.

### 4. Compoundierung

Die Mischungen wurden jeweils mit einem Doppelwellenextruder Typ ZE 40 A der Fa. Berstorff mit einer Verfahrensteillänge von 35 D unterteilt in 10 Gehäuse hergestellt. Dabei wurde das Flammschutzmittel in Zone 5 zudosiert. Die Granulierung erfolgte in einer üblichen Unterwassergranuliereinrichtung. Das anfallende Granulat wurde dann in einem Wirbelbett-Trockner bei Temperaturen zwischen 60° bis 100°C und Verweilzeiten von 5 bis 10 min. auf Wassergehalte< 0,03 % getrocknet und anschließend 15 Std. bei 80°C getempert.

### 5. Rezepturen der TPU 1-7

**Tabelle 1**

| | TPU 1 | TPU 2 | TPU 3 | TPU 4 | TPU 5 | TPU 6 | TPU 7 |
|---|---|---|---|---|---|---|---|
| Herstellverfahren | Handguß | Handguß | Handguß | Extruderverfahren | Extruderverfahren | Extruderverfahren | Extruderverfahren |
| PTHF 1000 | 1000 | | | 1000 | | | |
| Polyol A | | 1000 | | | 1000 | | |
| Capromer PD1-20 | | | | | | 1000 | |
| Eternacoll PH-200D | | | 1000 | | | | 1000 |
| Ultradur B4500 NAT | | | | 785,312 | 434,9 | 483,54 | 714,354 |
| Lupranat MET | 630 | 440 | 565 | 400,125 | 195,08 | 203,71 | 224,096 |
| Butandiol-1,4 | 136,74 | 111,62 | 156,64 | 48,954 | 20,66 | 22,89 | 32,146 |

Zu allen Rezepturen wurden jeweils 0,5% Irganox 1010, 0,5% Irganox 1098, 1% Elastostab H01 sowie 200ppm Zinn-dioctoat als Katalysator hinzugegeben.

### 6. Rezepturen der flammgeschützten TPU - Compound 1-4

**Tabelle 2**

| | | | Compound 1 (Vergleichsbeispiel) | Compound 2 (Vergleichsbeispiel) | Compound 3 (Vergleichsbeispiel) | Compound 4 (erfindungsgemäß) |
|---|---|---|---|---|---|---|
| Herstellverfahren | | | Compoundierung | Compoundierung | Compoundierung | Compoundierung |
| TPU 1 | | | **80** | | | |
| TPU 3 | | | | **80** | | |
| TPU 4 | | | | | **80** | |
| TPU 7 | | | | | | 80 |
| Melapur MC 15 ED | | | 20 | 20 | 20 | 20 |
| MFR [g/10 min] DIN EN ISO 1133 | 190 °C | 2,16 Kg | 17 | 32 | 21 | 61 |

### 7. Herstellung der Prüfkörper

Aus den Granulaten wurden mit einem Einwellenextruder Typ Arenz mit einer Dreizonenschnecke mit Mischteil (Schneckenverhältnis1:3) zu Folien mit einer Dicke von 1,6 mm extrudiert.

### 8. Bestimmung der mechanischen Eigenschaften

Gemessen wurde die Zugfestigkeit bzw. Reissdehnung (gemäß DIN 53504), die Dichte (DIN EN ISO 1183-1, A), die Weiterreißfestigkeit (DIN ISO 34-1, B (b)), der Abrieb (DIN 53516) und die Shore Härte A (gemäß DIN 53505) der entsprechenden Probenkörper.

**Tabelle 3**

| | TPU 1 | TPU 2 | TPU 3 | TPU 4 | TPU 5 | TPU 6 | TPU 7 |
|---|---|---|---|---|---|---|---|
| | | | | | | | |
| Dichte [g/cm3] | 1,12 | 1,19 | 1,21 | 1,16 | 1,19 | 1,18 | 1,23 |
| Shore A | 87 | 87 | 91 | 91 | 85 | 85 | 92 |
| ZF [MPa] | 45 | 50 | 43 | 41 | 45 | 46 | 47 |
| RD [%] | 600 | 650 | 490 | 730 | 750 | 690 | 500 |
| WRF [kN/m] | 70 | 70 | 114 | 87 | 65 | 69 | 117 |
| Abrieb [mm³] | 25 | 30 | 38 | 36 | 35 | 43 | 38 |

**Tabelle 4**

| | | Compound 1 (Vergleichsbeispiel) | Compound 2 (Vergleichsbeispiel) | Compound 3 (Vergleichsbeispiel) | Compound 4 (erfindungsgemäß) |
|---|---|---|---|---|---|
| Standardmech anik | | | | | |
| Dichte [g/cm3] | [g/cm3 ] | 1,193 | 1,263 | 1,229 | 1,293 |
| Shore A | [A] | 91 | 87 | 96 | 96 |
| ZF [MPa] | [MPa] | 42 | 35 | 18 | 26 |
| RD [%] | [%] | 540 | 550 | 600 | 510 |
| WRF [kN/m] | [kN/m] | 65 | 78 | 73 | 102 |
| Abrieb [mm³] | [mm3] | 31 | 44 | 55 | 34 |

### 9. Bestimmung der Alterungsbeständigkeit und der Hydrolysebeständigkeit

Von oxidativer Alterung wird im Zusammenhang mit dieser Erfindung gesprochen, wenn sich bei den thermoplastischen Polyurethanen im Laufe der Zeit die mechanischen Parameter, wie Zugfestigkeit, Reißdehnung, Weiterreißfestigkeit, Flexibilität, Schlagfestigkeit, Weichheit etc. negativ verändern.

Um die oxidative Alterungsbeständigkeit zu bewerten, wird ein Probekörper bei 150 °C für 3000h, bei 175°C für 240h und bei 200°C für 6h hängend in einem Umluftofen gelagert und anschließend mechanische Parameter bestimmt. Die Ergebnisse sind in den nachfolgenden Tabellen zusammengefasst.

Um die Hydrolysebeständigkeit zu bewerten, wird ein Probekörper bei 85°C und 85% relativer Luftfeuchtigkeit für 3000 Stunden gelagert und anschließend mechanische Parameter bestimmt. Die Ergebnisse sind in den nachfolgenden Tabellen zusammengefasst.

**Tabelle 5**

| | | TPU 1 | TPU 2 | TPU 3 | TPU 4 | TPU 5 | TPU 6 | TPU 7 |
|---|---|---|---|---|---|---|---|---|
| Heißluftalterung 200°C/6h | | | | | | | | |
| ZF [MPa] (Differenz zu 0h [%]) | | ** | ** | ** | 20 (-51) | ** | ** | 26 (-45) |
| RD [%] (Differenz zu 0h [%]) | | ** | ** | ** | 590 (-19) | ** | ** | 670 (+34) |
| Heißluftalterung 175°C/240h | | | | | | | | |
| ZF [MPa] (Differenz zu 0h [%]) | [MPa] | ** | ** | ** | ** | 18 (-60) | 23 (-50) | 27 (-43) |
| RD[%] (Differenz zu 0h [%]) | [%] | ** | ** | ** | ** | 340 (-54) | 460 (-33) | 300 (-40) |
| Heißluftalterung 150°C/3000h | | | | | | | | |
| ZF [MPa] (Differenz zu 0h [%]) | [MPa] | ** | 9 (-82) | 41 (-5) | ** | 17 (-62) | 21 (-54) | 20 (-58) |
| RD[%] (Differenz zu 0h [%]) | [%] | ** | 420 (-35) | 190 (-61) | ** | 310 (-58) | 250 (-74) | 310 (-38) |
| Feuchte-Wärme 85/85 /3000h | | | | | | | | |
| ZF [MPa] (Differenz zu 0h [%]) | [MPa] | 31 (-31) | ** | 36 (-16) | 21 (-49) | ** | ** | 25 (-47) |
| RD [%] (Differenz zu 0h [%]) | [%] | 470 (-22) | ** | 470 (-4) | 770 (+5) | ** | ** | 250 (-50) |

| | | | | | | | | |
|---|---|---|---|---|---|---|---|---|
| ** Probe zerstört | | | | | | | | |

Das erfindungsgemäße TPU 7 erfüllt die Anforderungen der Temperaturklasse D sowie die verschärften Vorschriften der LV 112 für die Hydrolysebeständigkeit.

**Tabelle 6**

| | | Compound 1 (Vergleichsbeispiel) | Compound 2 (Vergleichsbeispiel) | Compound 3 (Vergleichsbeispiel) | Compound 4 (erfindungsgemäß) |
|---|---|---|---|---|---|
| Heißluftalterung 200°C/6h | | | | | |
| ZF [MPa] (Differenz zu 0h [%]) | [MP a] | ** | ** | 8(-56) | 14(-46) |
| RD [%] (Differenz zu 0h [%]) | [%] | ** | ** | 130(-78) | 490 (-4) |

| Heißluftalterung 175°C/240h | | | | | |
|---|---|---|---|---|---|
| ZF [MPa] (Differenz zu 0h [%]) | [MP a] | ** | ** | 11 (-39) | 18(-31) |
| RD [%] (Differenz zu 0h [%]) | [%] | ** | ** | 2(-100) | 280(-45) |

| Heißluftalterung 165°C/1000h | | | | | |
|---|---|---|---|---|---|
| ZF [MPa] (Differenz zu 0h [%]) | [MP a] | ** | ** | ** | 14(-46) |
| RD [%] (Differenz zu 0h [%]) | [%] | ** | ** | ** | 100(-80) |

| Heißluftalterung 150°C/3000h | | | | | |
|---|---|---|---|---|---|
| ZF [MPa] (Differenz zu 0h [%]) | [MP a] | ** | ** | ** | 17(-35) |
| RD [%] (Differenz zu 0h [%]) | [%] | ** | ** | ** | 160(-69) |

| Feuchte-Wärme 85/85 /3000h | | | | | |
|---|---|---|---|---|---|
| ZF [MPa] (Differenz zu 0h [%]) | [MP a] | 14(-67) | 15(-57) | 8(-56) | 10(-62) |
| RD [%] (Differenz zu 0h [%]) | [%] | 630(+17) | 580(+5) | 120(-80) | 380(-25) |

| | | | | | |
|---|---|---|---|---|---|
| ** Probe zerstört | | | | | |

Das erfindungsgemäße Compound 4 erfüllt die Anforderungen der Temperaturklasse D sowie die verschärften Vorschriften der LV 112 für die Hydrolysebeständigkeit.

### Zitierte Literatur

"Kunststoffhandbuch, Band 7, Polyurethane", Carl Hanser Verlag, 3. Auflage 1993, Kapitel 3.1
Kunststoffhandbuch, Band VII, herausgegeben von Vieweg und Höchtlen, Carl Hanser Verlag, München 1966 (S. 103-113)

## Patentansprüche

1. Thermoplastisches Polyurethan, erhältlich oder erhalten nach einem Verfahren, umfassend die Schritte (i) und (ii):
(i) Umsetzung eines thermoplastischen Polyesters (PE-1) mit einem Diol (D1) unter Erhalt einer Zusammensetzung (Z1) enthaltend einen Polyester (PE-2),
(ii) Umsetzung der gemäß Schritt (i) erhaltenen Zusammensetzung (Z1) mit einer Isocyanatzusammensetzung (11), enthaltend mindestens ein Polyisocyanat, und einer Polyolzusammensetzung (P1),
wobei die Polyolzusammensetzung (P1) mindestens ein Polycarbonatpolyol (PC1) enthält,
wobei der thermoplastische Polyester (PE-1) ein Molekulargewicht im Bereich von 15000 g/mol bis 70000 g/mol aufweist und der Polyester (PE-2) ein Molekulargewicht im Bereich von 1000 g/mol bis 6000 g/mol aufweist, und
wobei das Diol (D1) 1,4-Butandiol ist und der thermoplastische Polyester (PE-1) ausgewählt ist aus der Gruppe bestehend aus Polyalkylenterephthalaten und Poly-L-Milchsäure.

2. Thermoplastisches Polyurethan gemäß Anspruch 1, wobei das mindestens eine Polycarbonatpolyol (PC1) ausgewählt ist aus der Gruppe bestehend aus Polycarbonatdiolen basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole.

3. Thermoplastisches Polyurethan gemäß Anspruch 1 oder 2, wobei das mindestens eine Polycarbonatpolyol (PC1) ein zahlenmittleres Molekulargewicht Mn im Bereich von 500 bis 4000, bestimmt über GPC, aufweist.

4. Thermoplastisches Polyurethan gemäß einem der Ansprüche 1 bis 3, wobei das Polyisocyanat ausgewählt ist aus der Gruppe bestehend aus Hexamethylendiisocyanat und Diphenylmethandiisocyanat (MDI) ist.

5. Thermoplastisches Polyurethan gemäß einem der Ansprüche 1 bis 4, wobei das thermoplastische Polyurethan eine Shore Härte im Bereich von Shore 45 A bis Shore 78 D aufweist.

6. Verfahren zur Herstellung eines thermoplastischen Polyurethans, umfassend die Schritte (i) und (ii):
(i) Umsetzung eines thermoplastischen Polyesters (PE-1) mit einem Diol (D1) unter Erhalt einer Zusammensetzung (Z1) enthaltend einen Polyester (PE-2),
(ii) Umsetzung der gemäß Schritt (i) erhaltenen Zusammensetzung (Z1) mit einer Isocyanatzusammensetzung (I1), enthaltend mindestens ein Polyisocyanat, und einer Polyolzusammensetzung (P1),
wobei die Polyolzusammensetzung (P1) mindestens ein Polycarbonatpolyol (PC1) enthält,
wobei der thermoplastische Polyester (PE-1) ein Molekulargewicht im Bereich von 15000 g/mol bis 70000 g/mol aufweist und der Polyester (PE-2) ein Molekulargewicht im Bereich von 1000 g/mol bis 6000 g/mol aufweist, und
wobei das Diol (D1) 1,4-Butandiol ist und der thermoplastische Polyester (PE-1) ausgewählt ist aus der Gruppe bestehend aus Polyalkylenterephthalaten und Poly-L-Milchsäure.

7. Zusammensetzung enthaltend mindestens die Komponenten (A) und (B)
(A) ein thermoplastisches Polyurethan gemäß einem der Ansprüche 1 bis 5,
(B) mindestens ein Flammschutzmittel.

8. Zusammensetzung gemäß Anspruch 7, wobei das Flammschutzmittel ausgewählt ist aus der Gruppe bestehend aus Metallhydroxiden, stickstoffhaltigen Flammschutzmitteln und phosphorhaltigen Flammschutzmitteln.

9. Zusammensetzung gemäß einem der Ansprüche 7 oder 8, wobei der Anteil der Summe der thermoplastischen Polyurethane in der Zusammensetzung im Bereich von 20 Gew.-% bis 80 Gew.-%, bezogen auf die gesamte Zusammensetzung, liegt.

10. Verwendung eines thermoplastischen Polyurethans gemäß einem der Ansprüche 1 bis 5 oder einer Zusammensetzung gemäß einem der Ansprüche 7 bis 9 zur Herstellung von Kabelummantelungen.

11. Folien, Formteile, Rollen, Fasern, Verkleidungen in Automobilen, Schläuche, Kabelstecker, Faltenbälge, Schleppkabel, Kabelummantelungen, Dichtungen, Riemen oder Dämpfungselemente enthaltend ein thermoplastisches Polyurethan gemäß einem der Ansprüche 1 bis 5 oder eine Zusammensetzung gemäß einem der Ansprüche 7 bis 9.

## Claims

1. A thermoplastic polyurethane obtainable or obtained by a process comprising steps (i) and (ii):
(i) reaction of a thermoplastic polyester (PE-1) with a diol (D1) to obtain a composition (Z1) comprising a polyester (PE-2),
(ii) reaction of the composition (Z1) obtained in step (i) with an isocyanate composition (I1) comprising at least one polyisocyanate, and with a polyol composition (P1),
where the polyol composition (P1) comprises at least one polycarbonate polyol (PC1),
where the thermoplastic polyester (PE-1) has a molecular weight in the range from 15 000 g/mol to 70 000 g/mol and the polyester (PE-2) has a molecular weight in the range from 1000 g/mol to 6000 g/mol, and
where the diol (D1) is butane-1,4-diol and the thermoplastic polyester (PE-1) is selected from the group consisting of polyalkylene terephthalates and poly-L-lactic acid.

2. The thermoplastic polyurethane according to claim 1, where the at least one polycarbonate polyol (PC1) is selected from the group consisting of polycarbonatediols based on butanediol and hexanediol, polycarbonatediols based on pentanediol and hexanediol, polycarbonatediols based on hexanediol, and mixtures of two or more of these polycarbonatediols.

3. The thermoplastic polyurethane according to claim 1 or 2, where the at least one polycarbonate polyol (PC1) has a number-average molecular weight Mn in the range from 500 to 4000, determined by GPC.

4. The thermoplastic polyurethane according to any of claims 1 to 3, where the polyisocyanate is selected from the group consisting of hexamethylene diisocyanate and diphenylmethane diisocyanate (MDI).

5. The thermoplastic polyurethane according to any of claims 1 to 4, where the thermoplastic polyurethane has a Shore hardness in the range from Shore 45 A to Shore 78 D.

6. A process for producing a thermoplastic polyurethane, comprising steps (i) and (ii):
(i) reaction of a thermoplastic polyester (PE-1) with a diol (D1) to obtain a composition (Z1) comprising a polyester (PE-2),
(ii) reaction of the composition (Z1) obtained in step (i) with an isocyanate composition (I1) comprising at least one polyisocyanate, and with a polyol composition (P1),
where the polyol composition (P1) comprises at least one polycarbonate polyol (PC1),
where the thermoplastic polyester (PE-1) has a molecular weight in the range from 15 000 g/mol to 70 000 g/mol and the polyester (PE-2) has a molecular weight in the range from 1000 g/mol to 6000 g/mol, and
where the diol (D1) is butane-1,4-diol and the thermoplastic polyester (PE-1) is selected from the group consisting of polyalkylene terephthalates and poly-L-lactic acid.

7. A composition comprising at least components (A) and (B)
(A) a thermoplastic polyurethane according to any of claims 1 to 5,
(B) at least one flame retardant.

8. The composition according to claim 7, where the flame retardant is selected from the group consisting of metal hydroxides, nitrogen-containing flame retardants and phosphorus-containing flame retardants.

9. The composition according to either of claims 7 and 8, where the total content of the thermoplastic polyurethanes in the composition is in the range from 20% by weight to 80% by weight, based on the entire composition.

10. The use of a thermoplastic polyurethane according to any of claims 1 to 5 or of a composition according to any of claims 7 to 9 for the production of cable sheathing.

11. A film, molding, roller, fiber, automobile cladding, hose, cable plug, folding bellows, drag cable, cable sheathing, gasket, belt or damping element comprising a thermoplastic polyurethane according to any of claims 1 to 5 or a composition according to any of claims 7 to 9.

## Revendications

1. Polyuréthane thermoplastique, pouvant être obtenu ou obtenu selon un procédé comprenant les étapes (i) et (ii) :
(i) transformation d'un polyester thermoplastique (PE-1) avec un diol (D1) avec obtention d'une composition (Z1) contenant un polyester (PE-2),
(ii) transformation de la composition (Z1) obtenue selon l'étape (i) avec une composition d'isocyanate (I1), contenant au moins un polyisocyanate, et une composition de polyol (P1),
la composition de polyol (P1) contenant au moins un polycarbonatepolyol (PC1),
le polyester thermoplastique (PE-1) présentant un poids moléculaire dans la plage de 15000 g/mole à 70000 g/mole et le polyester (PE-2) présentant un poids moléculaire dans la plage de 1000 g/mole à 6000 g/mole, et
le diol (D1) étant le 1,4-butanediol et le polyester thermoplastique (PE-1) étant choisi dans le groupe constitué par les poly(téréphtalates d'alkylène) et le poly(acide L-lactique).

2. Polyuréthane thermoplastique selon la revendication 1, ledit au moins un polycarbonatepolyol (PC1) étant choisi dans le groupe constitué par les polycarbonatediols à base de butanediol et d'hexanediol, les polycarbonatediols à base de pentanediol et d'hexanediol, les polycarbonatediols à base d'hexanediol, et les mélanges de deux ou plus de ces polycarbonatediols.

3. Polyuréthane thermoplastique selon la revendication 1 ou 2, ledit au moins un polycarbonatepolyol (PC1) présentant un poids moléculaire moyen en nombre Mn dans la plage de 500 à 4000, déterminé par CPG.

4. Polyuréthane thermoplastique selon l'une des revendications 1 à 3, le polyisocyanate étant choisi dans le groupe constitué par le diisocyanate d'hexaméthylène et le diisocyanate de diphénylméthane (MDI).

5. Polyuréthane thermoplastique selon l'une des revendications 1 à 4, le polyuréthane thermoplastique présentant une dureté Shore dans la plage de Shore 45 A à Shore 78 D.

6. Procédé de préparation d'un polyuréthane thermoplastique, comprenant les étapes (i) et (ii) :
(i) transformation d'un polyester thermoplastique (PE-1) avec un diol (D1) avec obtention d'une composition (Z1) contenant un polyester (PE-2),
(ii) transformation de la composition (Z1) obtenue selon l'étape (i) avec une composition d'isocyanate (I1), contenant au moins un polyisocyanate, et une composition de polyol (P1),
la composition de polyol (P1) contenant au moins un polycarbonatepolyol (PC1),
le polyester thermoplastique (PE-1) présentant un poids moléculaire dans la plage de 15000 g/mole à 70000 g/mole et le polyester (PE-2) présentant un poids moléculaire dans la plage de 1000 g/mole à 6000 g/mole, et
le diol (D1) étant le 1,4-butanediol et le polyester thermoplastique (PE-1) étant choisi dans le groupe constitué par les poly(téréphtalates d'alkylène) et le poly(acide L-lactique).

7. Composition contenant au moins les composants (A) et (B)
(A) un polyuréthane thermoplastique selon l'une des revendications 1 à 5,
(B) au moins un agent ignifuge.

8. Composition selon la revendication 7, l'agent ignifuge étant choisi dans le groupe constitué par les hydroxydes métalliques, les agents ignifuges contenant de l'azote et les agents ignifuges contenant du phosphore.

9. Composition selon l'une des revendications 7 ou 8, la proportion de la somme des polyuréthanes thermoplastiques dans la composition étant située dans la plage de 20 % en poids à 80 % en poids, par rapport à la composition totale.

10. Utilisation d'un polyuréthane thermoplastique selon l'une des revendications 1 à 5 ou d'une composition selon l'une des revendications 7 à 9 pour la fabrication de gaines de câbles.

11. Feuilles, pièces moulées, galets, fibres, revêtements dans les automobiles, tuyaux flexibles, connecteurs, soufflets, câbles de remorquage, gaines de câbles, joints d'étanchéité, courroies ou éléments d'amortissement contenant un polyuréthane thermoplastique selon l'une des revendications 1 à 5 ou une composition selon l'une des revendications 7 à 9.
